# DEMANDE DE BREVET EUROPEEN

(11) **EP 0 814 530 A1**
(43) Date de publication de la demande: **29.12.1997**
(21) Numéro de dépôt: 97401288.2
(22) Date de dépôt: 09.06.1997
(51) Int. Cl.: H01M 10/04, H01M 2/18

(54) **Générateur électrochimique**

(30) Priorité: 18.06.1996 FR 9607538; 14.10.1996 FR 9612487; 03.03.1997 FR 9702492
(71) Demandeur: ALCATEL ALSTHOM COMPAGNIE GENERALE D'ELECTRICITE, 75382 Paris Cédex 08 (FR)
(72) Inventeur: Verhoog, Roelof, 33200 Bordeaux (FR); Grivel, Tristan, 86280 Saint-Benoit (FR); Ristord, Denis, 33127 Martignas (FR); Gilabert, Claude, 33290 Pian Medoc (FR)
(74) Mandataire: Feray, Valérie

(57) **Abrégé**

Générateur électrochimique comprenant un conteneur (1) dans lequel est situé un faisceau électrochimique comportant des électrodes positives (6) et des électrodes négatives (5) séparées par des séparateurs intercalaires (7), électrodes et séparateurs étant imprégnés par un électrolyte, caractérisé en ce qu'un matériau de conduction thermique (8, 20) est situé de chaque côté d'une extrémité des électrodes dudit faisceau, entre leur tranche et la paroi respective (9, 10) dudit conteneur (1) et en contact avec lesdites tranches des électrodes et ladite paroi (9, 10), ledit matériau (8, 20) étant électriquement isolant, au moins du côté en contact avec lesdites tranches desdites électrodes.

## Description

La présente invention concerne un générateur électrochimique. Plus particulièrement, l'invention concerne les générateurs électrochimiques dit à électrolyte limité, c'est-à-dire ceux pour lesquels les électrodes et les séparateurs sont imprégnés par un électrolyte, mais pour lesquels il n'y a pas d'électrolyte excédentaire entre le faisceau électrochimique, constitué par le paquet assemblé d'électrodes avec ses séparateurs, et les parois internes du conteneur dans lequel est situé le faisceau. Pour de tels générateurs, se pose le problème du transfert thermique des calories générées dans le faisceau vers les parois du conteneur.

Dans un générateur dit à électrolyte libre ou excédentaire, il existe de l'électrolyte excédentaire entre le faisceau et les parois du conteneur. La conduction des calories du faisceau vers les parois du conteneur se fait par cet électrolyte excédentaire et le problème du refroidissement du faisceau ne se pose donc pas.

Par ailleurs dans un générateur électrochimque, il y a nécessairement un certain jeu entre le faisceau et le conteneur, pour l'introduction du faisceau et pour les dilatations. Ce jeu est de l'ordre du millimètre. Dans un générateur à électrolyte limité, il ne peut donc pas y avoir de contact thermique direct entre le faisceau et les parois du conteneur

L'invention a ainsi pour objet un générateur électrochimique comprenant un conteneur dans lequel est situé un faisceau électrochimique comportant des électrodes positives et des électrodes négatives séparées par des séparateurs intercalaires, électrodes et séparateurs intercalaires étant imprégnés par un électrolyte, caractérisé en ce qu'un matériau de conduction thermique est situé de chaque côté d'une extrémité des électrodes dudit faisceau, entre leur tranche et la paroi respective dudit conteneur et en contact avec lesdites tranches des électrodes et ladite paroi, ledit matériau étant électriquement isolant, au moins du côté en contact avec lesdites tranches desdites électrodes.

Selon une autre caractéristique, ledit matériau de conduction thermique est compressible dans la direction perpendiculaire à ladite paroi du conteneur contre laquelle il est en contact.

Selon une forme d'exécution, on peut utiliser un matériau complexe du type sandwich : plastique-métal-plastique.

Selon une autre forme d'exécution, ledit matériau est un séparateur imprégné d'électrolyte (par exemple du KOH). Il s'agit par exemple d'un feutre de polypropylène de même nature que les séparateurs intercalaires des électrodes. On peut cependant utiliser un matériau souple, imprégné d'électrolyte, et de nature différente de celui utilisé pour les séparateurs intercalaires des électrodes.

Selon une variante de l'invention, ledit matériau de conduction thermique est constitué par une portion de chaque séparateur intercalaire des électrodes, les dépassant sur la tranche aux deux extrémités, et recourbé chacune contre la tranche d'une électrode.

Selon un mode de réalisation, au moins une électrode sur deux est enfermée dans une pochette constituée par deux séparateurs intercalaires, dépassant de chaque côté l'électrode et réunies l'une à l'autre à chaque extrémité de l'électrode, lesdites parties réunies des deux séparateurs à chaque extrémité de l'électrode étant recourbées contre la tranche de l'électrode et constituant ledit matériau de conduction thermique.

Selon un autre mode de réalisation, les séparateurs intercalaires des électrodes sont constitués par une pochette formée par pliage d'un pavé, la pliure couvrant la tranche supérieure de l'électrode et comportant une fente pour le passage d'une connexion, ledit matériau de conduction thermique étant constitué par une portion de chaque pavé dépassant et recourbé sur la tranche de l'électrode. Les positions mutuelles de l'électrode et du séparateur sont bloquées par la connexion insérée dans la fente, et la tranche supérieure de l'électrode est en butée contre la pliure de la pochette. Celle solution permet un gain de hauteur en limitant le dépassement de séparateur au-dessus et au-dessous des électrodes.

De préférence les deux plis de la bande formant la pochette sont réunis par soudure, après insertion de l'électrode, par ultrasons ou par effet thermique. En réunissant les deux plis de la bande formant la pochette par soudure (de préférence ponctuelle) après insertion de l'électrode, on ferme la pochette et on empêche aussi des déplacements dans un sens perpendiculaire au plan de l'électrode.

Ce séparateur en "poncho" permet le remplissage optimal du jeu entre les électrodes et le conteneur qui les contient, par du séparateur imbibé d'électrolyte assurant une interférence de 1 à 2 mm entre le séparateur et le conteneur. Les séparateurs imbibés d'électrolyte sont en contact avec les parois latérales du conteneur et le transfert de chaleur s'opère avec une grande efficacité.

Selon uneautre variante de l'invention, les séparateurs intercalaires des électrodes sont constitués par un séparateur zig-zag, ledit matériau de conduction thermique étant situé de la même façon, entre la paroi du conteneur et les tranches des électrodes recouvertes, une sur deux, dudit séparateur intercalaire.

Avantageusement, ledit conteneur comporte, associé à chacune des deux parois comportant intérieurement ledit matériau de conduction thermique, une double paroi externe séparée de ladite paroi par un espace de circulation d'un fluide de refroidissement.

L'invention va maintenant être décrite en se référant au dessin annexé dans lequel :

La figure 1 est une vue partielle, simplifiée, en vue de dessus coupée montrant un élément d'un générateur électrochimique selon l'invention.

La figure 2 montre l'élément de la figure 1 en coupe verticale.

La figure 3 est une vue partielle montrant une variante de l'invention.

La figure 4 montre une autre variante de l'invention.

La figure 5 montre un matériau de conduction thermique du type sandwich.

La figure 6 montre une autre variante de l'invention.

La figure 7 montre un mode particulier de réalisation du séparateur de la figure 6.

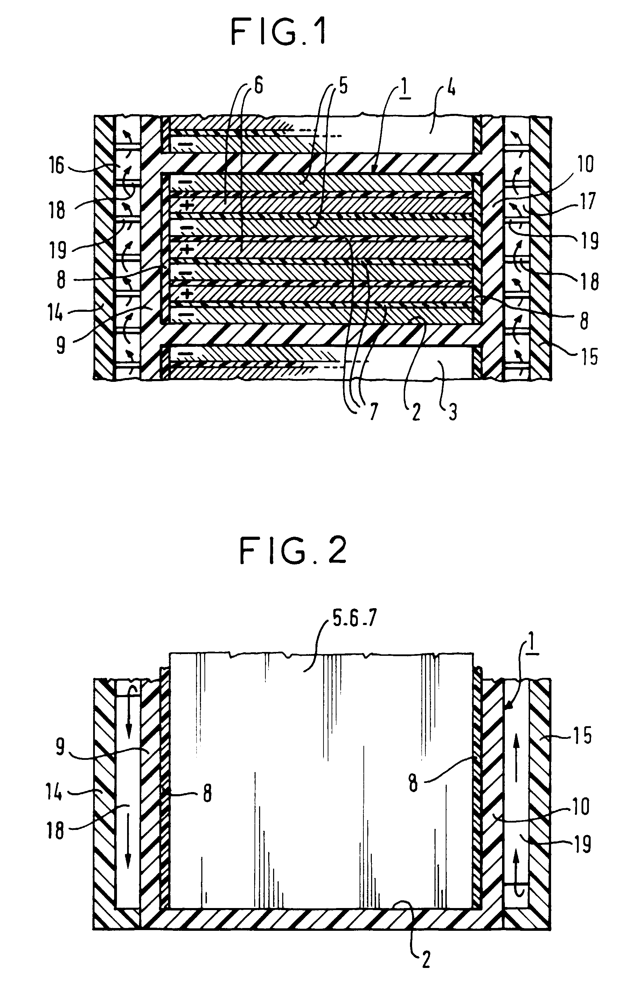

En se référant aux figures 1 et 2, on voit partiellement un générateur électrochimique dit "batterie monobloc" comprenant un conteneur 1 qui, en l'occurence, comporte plusieurs bacs 2, 3, 4 contenant chacun un faisceau électrochimique. Seul le bac 2 est ici représenté avec son faisceau.

Le faisceau électrochimique comprend une alternance d'électrodes négatives 5 et d'électrodes positives 6 séparées par des séparateurs intercalaires 7. L'ensemble est imprégné d'un électrolyte tel que du KOH par exemple. Les séparateurs 7 sont, par exemple, en feutre de polypropylène.

Selon l'invention, pour conduire les calories produites dans le faisceau électrochimique, vers les parois du conteneur 1, un matériau de conduction thermique 8 est situé de chaque côté d'une extrémité des électrodes, entre leur tranche et la paroi respective 9, 10 du conteneur.

Ce matériau 8 est en contact avec, d'une part la tranche du faisceau, et d'autre part avec la paroi respective 9 ou 10. Ainsi, les calories produites dans le faisceau sont-elles conduites vers les parois 9, 10.

Le matériau 8 est placé sur les tranches du faisceau et non pas de part et d'autre de l'empilage alternatif d'électrodes positives et négatives du faisceau, de façon à assurer une homogénéité du refroidissement des électrodes par conduction thermique vers les parois du conteneur 1.

Le matériau de conduction thermique 8 est isolant électriquement, au moins du côté situé au contact de la tranche du faisceau électrochimique. Par ailleurs, il est chimiquement et électrochimiquement inerte.

Pour tenir compte des tolérances dimensionnelles, le matériau 8 est compressible dans la direction perpendiculaire aux parois 9, 10.

Pour la facilité du montage, les deux pièces 8 de matériau de conduction thermique sont introduites dans le bac 2 du conteneur 1 avant le faisceau électrochimique. Ces pièces 8 doivent donc avoir une certaine résistance à la traction à cause du frottement lors de l'introduction du faisceau. Les deux pièces 8 peuvent aussi être introduites en même temps que le faisceau électrochimique.

Comme dit plus haut, ce matériau de conduction thermique constituant ces deux pièces 8 peut être un séparateur imprégné de l'électrolyte, il peut être de même nature que les séparateurs intercalaires 7 ou d'une nature différente.

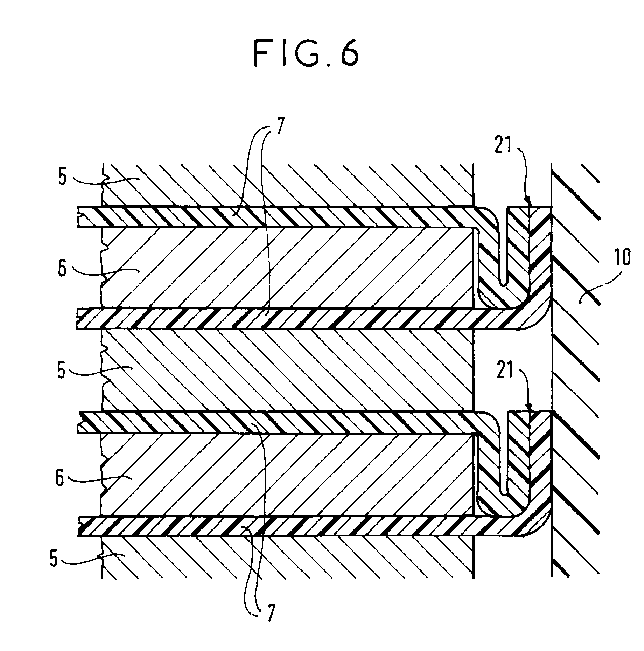

La figure 5 montre un exemple d'un matériau de conduction thermique 8 qui est constitué d'un matériau complexe sandwich : une partie métallique 11 entre deux couches plastiques 12, 13.

Pour l'évacuation des calories, comme le montre les figures 1 et 2, le conteneur 1 comporte, associée à chacune des parois 9 et 10, une double paroi externe, respectivement 14 et 15, séparée de sa paroi respective par un espace 16, 17 de circulation d'un fluide de refroidissement. Des chicanes verticales 18, 19 assurent une plus grande longueur de circulation du fluide dans chaque espace 16, 17. Un tel aménagement de circulation d'un fluide de refroidissement est bien décrit dans le document de brevet français n° 2 697 678.

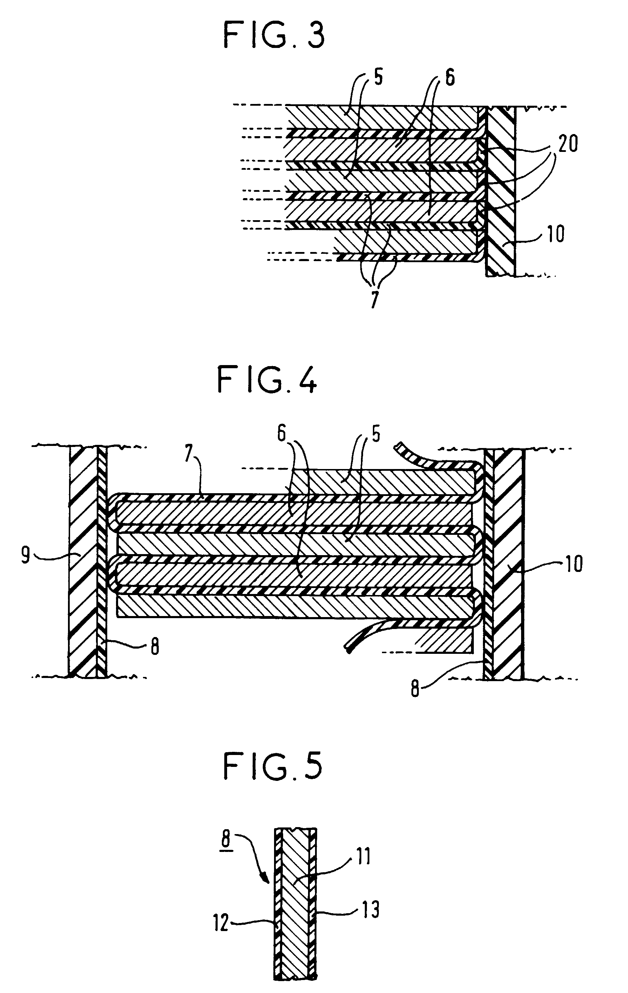

La figure 3 montre une variante, dans laquelle le matériau de conduction thermique est simplement constitué par une portion 20 de chaque séparateur intercalaire 7 des électrodes 5, 6, les dépassant sur la tranche aux deux extrémités (une seule est représentée) et recourbée contre la tranche d'une électrode.

La figure 4 montre une variante dans laquelle les séparateurs intercalaires 7 des électrodes 5, 6 sont constitués par un unique séparateur dit en zig-zag. Le matériau de conduction thermique 8 est alors placé de la même façon que sur les figures 1 et 2 entre la paroi et la tranche du faisceau électrochimique dont la tranche d'une électrode sur deux est recouverte du séparateur intercalaire 7.

La figure 6 montre une autre variante dans laquelle le matériau de conduction thermique est également constitué par l'extrémité recourbée 21, de deux séparateurs intercalaires 7 dépassant les extrémités des électrodes et réunis à chaque extrémité, par exemple par thermosoudure, pour former une pochette dans laquelle est enfermée une électrode sur deux : l'électrode 5 ou l'électrode 6. L'extrémité 21 est ainsi recourbée contre la tranche de l'électrode enfermée dans cette pochette.

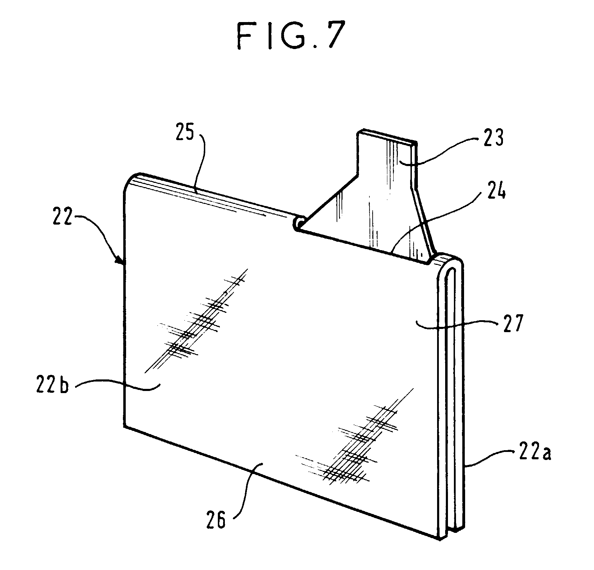

Selon un mode de réalisation particulier, les électrodes sont habillées par un séparateur formant une pochette, représentée sur la figure 7 et réalisée de la manière suivante. Dans une bande de matière fibreuse polymère, comme un feutre, un non tissé ou un tissage de polymère (un polyamide ou une polyoléfine), on découpe un pavé 22 (par exemple par découpe thermique ou à ultrasons) d'une longueur égale à deux fois la hauteur de plaque plus quelques millimètres. On insère la connexion 23 constituée par la tête de l'électrode 24 dans la fente 24 dont la longueur correspond à l'embase de la tête de l'électrode qui devra s'y insérer. On replie en pochette les deux plis 22a, 22b du pavé 22 de chaque côté de l'électrode 5, 6, la pliure 25 du sac couvrant la tranche supérieure de l'électrode 5, 6. La pochette obtenue affecte la forme d'un poncho. Elle est bien bloquée sur l'électrode 5, 6 dans le plan de celle-ci grâce à la coopération de la fente 24 et de la connexion 23. En outre elle peut être bloquée dans une direction perpendiculaire à l'électrode 5, 6 grâce à la soudure de la marge inférieure 26. La pochette présente deux marges latérales 27 constituant l'extrémité 21 en contact avec les parois 9, 10 du conteneur 1.

Au lieu qu'une électrode sur deux soit enfermée dans une telle pochette, comme représentée sur la figure 6, chaque électrode, 5 et 6 peut également être enfermée dans une telle pochette et les extrémités 21 recourbées contre chaque électrode. Dans ce cas, deux séparateurs intercalaires 7 séparent les électrodes les unes des autres.

## Revendications

1. Générateur électrochimique comprenant un conteneur (1) dans lequel est situé un faisceau électrochimique comportant des électrodes positives (6) et des électrodes négatives (5) séparées par des séparateurs intercalaires (7), électrodes et séparateurs étant imprégnés par un électrolyte, caractérisé en ce qu'un matériau de conduction thermique (8, 20) est situé de chaque côté d'une extrémité des électrodes dudit faisceau, entre leur tranche et la paroi respective (9, 10) dudit conteneur (1) et en contact avec lesdites tranches des électrodes et ladite paroi (9, 10), ledit matériau (8, 20) étant électriquement isolant, au moins du côté en contact avec lesdites tranches desdites électrodes.

2. Générateur électrochimique selon la revendication 1, caractérisé en ce que ledit matériau (8) de conduction thermique est compressible dans la direction perpendiculaire à ladite paroi (9, 10) du conteneur (1) contre laquelle il est en contact.

3. Générateur électrochimique selon l'une des revendications 1 ou 2, caractérisé en ce que ledit matériau de conduction thermique (8) est un matériau complexe plastique-métal-plastique (12, 11, 13)

4. Générateur électrochimique selon l'une des revendications 1 ou 2, caractérisé en ce que ledit matériau de conduction thermique (8) est un séparateur imprégné d'électrolyte.

5. Générateur électrochimique selon la revendication 4 caractérisé en ce que ledit séparateur est de même nature que les séparateurs intercalaires (7) des électrodes (5, 6).

6. Générateur selon la revendication 5 caractérisé en ce que ledit matériau de conduction thermique (20) est constitué par une portion (20) de chaque séparateur intercalaire (7) des électrodes, les dépassant sur la tranche aux deux extrémités, et recourbé chacune contre la tranche d'une électrode (5, 6).

7. Générateur selon la revendication 6 caractérisé en ce que au moins une électrode sur deux est enfermée dans une pochette constituée par deux séparateurs intercalaires (7), dépassant de chaque côté l'électrode et réunies l'une à l'autre à chaque extrémité de l'électrode, lesdites parties réunies (21) des deux séparateurs à chaque extrémité de l'électrode étant recourbées contre la tranche de l'électrode et constituant ledit matériau de conduction thermique.

8. Générateur selon la revendication 6 caractérisé en ce que les séparateurs intercalaires (7) des électrodes (5, 6) sont constitués par une pochette formée par pliage d'un pavé (22), la pliure (25) couvrant la tranche supérieure de l'électrode (5, 6) et comportant une fente (24) pour le passage d'une connexion (23), ledit matériau de conduction thermique (8) étant constitué par une portion (22) de chaque pavé (22) dépassant et recourbé sur la tranche de l'électrode.

9. Générateur selon l'une des revendications 1 à 5 caractérisé en ce que les séparateurs intercalaires des électrodes sont constitués par un séparateur (7) zig-zag, ledit matériau de conduction thermique (8) étant situé de la même façon, entre la paroi (9, 10) du conteneur et les tranches des électrodes recouvertes, une sur deux, dudit séparateur intercalaire (7).

10. Générateur selon l'une des revendications 1 à 9, caractérisé en ce que ledit conteneur (1) comporte, associé à chacune des deux parois (9, 10) comportant intérieurement ledit matériau de conduction thermique (8), une double paroi externe (14, 15) séparée de ladite paroi par un espace (16, 17) de circulation d'un fluide de refroidissement.
